# EUROPEAN PATENT SPECIFICATION

(11) **EP 2 467 019 B1**
(45) Date of publication and mention of the grant of the patent: **24.07.2013**
(21) Application number: 10752898.6
(22) Date of filing: 19.08.2010
(51) Int. Cl.: A01N 25/00, A01N 25/26, A01N 57/20, A01P 13/02

(54) **HERBICIDE DELIVERY**
HERBIZIDABGABE
DISTRIBUTION D'UN HERBICIDE

(30) Priority: 20.08.2009 GB 0914524
(43) Date of publication of application: 27.06.2012
(73) Proprietor: GROUNDCOVER DBM LIMITED, Margam Port Talbot SA13 2PE (GB)
(72) Inventor: RICHARDS, Ivor, Denbighshire (GB)
(74) Representative: Baker, Thomas Edward
(86) International application number: PCT/GB2010/001568
(87) International publication number: WO 2011/021003

(56) References cited:
- WO-A1-96/01048
- WO-A1-2006/103478
- US-A1- 2004 255 512

## Description

The present invention relates to a herbicide delivery method and product for delivery to a plant, the plant characterised by having a hollow stem. An example of such a plant is Japanese Knotweed.

Japanese Knotweed is a plant with a bamboo like stem and clusters of creamy flowers. The stems are hollow therefore drawing comparisons with bamboo. In the UK Japanese knotweed has been titled the most invasive plant as it will flourish in any soil however poor, and spread relentlessly overwhelming other plants and damaging eco-systems. It has the ability to grow through walls, tarmac and concrete and can wreck roads and buildings. Japanese knotweed was introduced into the UK in the Victorian era due to its apparent beauty however when it started taking over gardens it was thrown away thereby spreading into the wild. Its rapid spread is down to its toughness and having no natural enemies it is not naturally kept under control. An infestation reduces land value and removing it is expensive and time consuming as the roots can spread 7 metres wide, and 3 metres deep. There are strict legal requirements for getting rid of the roots and contaminated soil is classed as a controlled waste which has to be buried at least 5 metres deep on site or taken away by a licensed operator to a designated landfill site and buried to a depth of 5 metres. Many landfill operators would not accept Japanese knotweed and even if they do, charge a premium rate due to the requirement for deep burial.

A treatment for eradicating plants such as Japanese knotweed is the use of a spraying herbicide such as glyphosate, however such a herbicide programme can easily take up to three years to be effective and the herbicide must be administered by trained personnel or be closely supervised by a trained personnel. This method relies on the natural flow of liquids in the plant to transfer the herbicide to the rhizome. The problem lies in ensuring that the chemical is absorbed and travels down to the rhizome where dormant buds, which are the starting point for growth the following year have developed. However, there is concern with herbicide treatment in a spray format as the surrounding plants will also be affected, and significant volume of herbicide is wasted. Furthermore, spraying is not generally effective after one application and is thus repeated over several years.

A further alternative approach for treating knotweed is to deliver a herbicide directly into the hollow core of the plant which increases the ability of the herbicide to pass through the plant's root structure. US7165357 discloses a Japanese knotweed injector system for injecting a dose of plant killing fluid into the stem of the Japanese knotweed. A needle is provided which is inserted into a stem. The apparatus comprises a trigger which is squeezed and a pre-set volume of herbicide is injected into the stem cavity. The problem with such an apparatus and method of treating knotweed is that trained personnel must use the apparatus and the herbicide is dangerous requiring careful manipulation as the glyphosate must be prepared beforehand and transferred to a container which is attached to the injector. Furthermore, the apparatus itself is expensive, particularly for use by an amateur gardener wherein occasional or single use only is required.

The present invention overcomes the above-mentioned problems.

According to the present invention there is a method of administering a herbicide to a plant as defined in claim 1.

The herbicide is beneficially provided in a solid form. Significant advantages of treatment of a plant through this method are achieved as the herbicide can be administered to the plant without the requirement for professional assistance. The herbicide is safe for public use and the application is beneficially in a form wherein at least the peripheral surface is solid and can be administered quickly and easily and be directed specifically to a selected plant. This provides significant advantages over traditional herbicide spraying of the plants as the herbicide is targeted and will not therefore affect the surrounding environment. A further advantage of such targeted administering of the herbicide is that smaller quantities of herbicide are required. In a tablet or capsule form, the amount of herbicide present is not harmful to a human, and as such can be supplied for private and non-commercial use.

A further advantage resides in the fact that traditional treatments by a trained person requires the person to be extensively trained in handling of the herbicide and treatment techniques. Using the method according to the present invention simplifies the training required. Another advantage of the claimed invention is that the moisture of the plant itself is used to transfer the herbicide to the relevant location in the rhizones. As such, the quantity of herbicide reaching the plants can be carefully controlled.

The herbicide is beneficially in a dried format and can therefore be easily handled by an unskilled and untrained user. The herbicide is beneficially granulated and may be in the form of a tablet. Granulated or tablet form of herbicide is even more beneficially contained in a water soluble capsule. Such capsules are generally used in the art to administer powdered materials to a patient such as a person and may comprise opposing components which may interact with a resistance type fit to form an enclosure. This enclosure may be pre-filled with granulated herbicide or a tablet of herbicide. As the capsule is water soluble, once it is inserted into the opening of the stem of the plant then the capsule material will dissolve thus releasing the herbicide into the plant.

The capsule is beneficially made out of a gelatinous material. The significant advantage of such a material is that the capsule itself is not harmful to a person and additionally is flexible meaning that it can be deformed without spilling of the herbicide material. The herbicide material will also "keep" in the capsule and not provide a danger to children or animals. The capsule can therefore be handled without protective clothing and therefore can be used on a non-commercial basis. It will also be appreciated that herbicide in a liquid form may be supplied in a capsule. The capsule is beneficially completely sealed in such an embodiment.

The herbicide beneficially includes the active ingredient glyphosate. The glyphosate preferably comprises between 40wt% and 80wt% of the herbicide. Even more beneficially, the glyphosate comprises 65-75 wt% of the herbicide. Even more beneficially, the glyphosate comprises 68wt% of the herbicide.

The opening in the stem of the plant is beneficially provided by cutting the opening in the stem of the plant. Alternatively the opening may be provided by cutting substantially through the cross section of the stem. Cutting in this manner to remove the top of the plant either partially or completely enables the delivery means including the herbicide to be placed inside the plant.

The method may further comprise the step of administering dye (which may also be termed a colouring agent) to the plant into the opening provided in the stem. The dye is beneficially a tracing dye. The dye may comprise potassium permanganate. Even more beneficially, the dye comprises a food grade dye. The dye is beneficially in the form of a powder. The dye is also beneficially water soluble.

The provision of such a dye enables significant benefit in that administering a herbicide in the method as disclosed means that the herbicide will take some time (for example 24 hours) to be taken throughout the plant and as such will not immediately show signs of dying. This is particularly true if the top of the plant has been cut off as the stem will only be showing. The provision of a dye means that the dye can be seen in the stem of the plant within a relatively short time (approximately 24 hours) which shows that the plant has been treated and any further treatment is not required. It will then be clear that the plant will be absorbing the herbicide and the dye will also have passed through the plant. The rhizomes will also show colouring thereby confirming that herbicide has entered the rhizomes ensuring the plant is treated effectively.

Examples of suitable dyes which are commercially available and their colours are green (acid yellow 73), red (food amaranth), blue (food blue FCF), orange (food sunset yellow), yellow (food tartrazine), purple (food P/N). Such dye materials are beneficially in powdered form and are beneficially water soluble.

Also according to the present invention there is a method of administering a herbicide to a plant, the method comprising the steps of:
a) providing an opening in the stem of a plant, wherein the stem comprises a tubular portion having a cavity therein;
b) inserting a herbicide having a solid form through the opening into the stem of the plant.

It will be appreciated that the herbicide may be in a number of forms as hereinbefore described such as in the form of a tablet or substantially encapsulated within a delivery means.

The present invention will now be described by way of example only with reference to the accompanying drawings (not to scale) in which:
Figure 1 is a schematic exemplary embodiment of a capsule having herbicide therein according to an exemplary embodiment in the present invention;
Figure 2a and 2b are a schematic exemplary embodiments of the method of treating a plant having a hollow stem according to exemplary embodiment of the present invention.

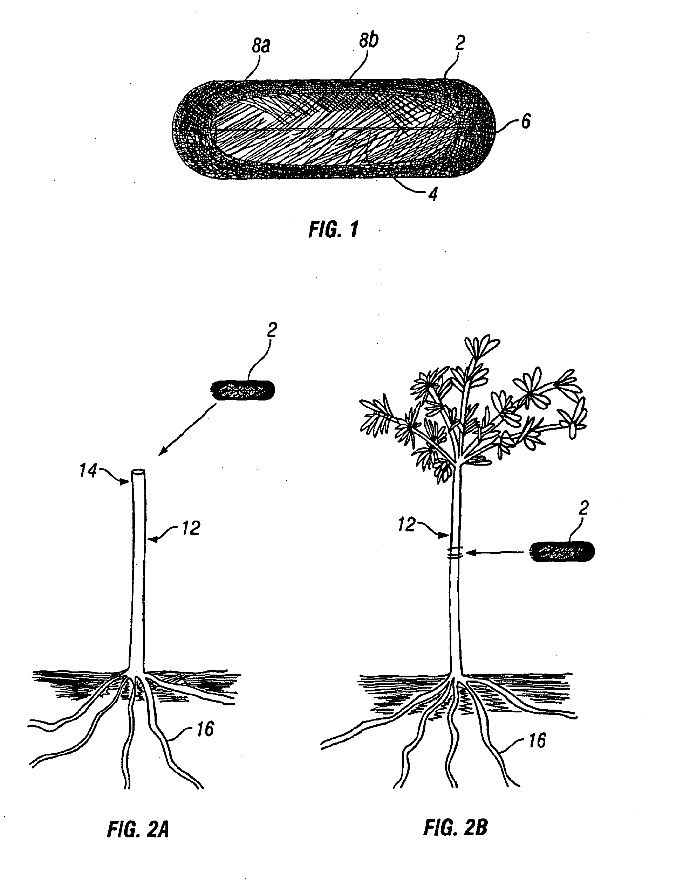

With reference to Figure 1 there is a capsule 2 having a herbicide 4 therein. The herbicide may be provided in various forms. In one embodiment, the herbicide may be provided as a tablet without the outer casing 6 which provides the capsule 2. Such a tablet could be administered to the plant, however, the provision of a capsule is beneficial as the herbicide does not then come into contact with the person administering the herbicide to the plant.

Beneficially the capsule comprises two halves 8a, 8b. Herbicide is provided in one half of the capsule and the other half, either 8a or 8b is secured to the opposing portion. An overlapping portion is provided between 8a and 8b and connected is achieved by simple friction fit.

In an alternative embodiment, the capsule may be sealed and comprise a liquid herbicide therein. In such an embodiment, a user will again not come into contact with the potentially harmful herbicide composition, but instead the non-harmful capsule can be handled by an unskilled user and inserted into the aperture provided in the stem of the plant.

The capsule may have markings thereon to indicate the content of the capsule. The capsule may be made of any material that does not react with the herbicide but must be soluble in water in order that at least a portion of the capsule dissolves when in contact with water in the plant. The capsule may be made of a gelatinous material such as gelatine and a natural preservative. Such a material is not harmful to a person and therefore the capsule can be manipulated, administered and stored by a user without specific careful storage requirements. The capsule may also be transparent.

A dye or pigment material may also be provided within the capsule 6. A suitable material may be for example potassium permanganate, however food grade dyes are beneficially used as such dyes are not harmful to animals or people if ingested. Such a material provides a distinctive colour to herbicide/dye mixture and once dissolved in the plant shows through the stem of the plant thus confirming that treatment has been completed. A responsible person can therefore be confident that the plant is being treated and will subsequently die without further treatment.

In a preferred embodiment, a powdered dye is provided which in contact with water dissolves. The dye may be provided with the herbicide and a powdered mixture may therefore be provided which may be formed into a tablet or alternatively provided in a capsule. The dye is beneficially a food grade dye which may be green (acid yellow 73), red (food amaranth), blue (food blue FCF), orange (food sunset yellow), yellow (food tartrazine), purple (food P/N). The dye may be provided as 0.1% dye to herbicide (for example glyphosate) ratio. It will be appreciated that a wide range of percentage of dye may be provided in order to achieve the desired effect. Approximately 0.001 % dye to a herbicide is believed to have the desired effect. In an embodiment wherein a capsule is provided having a liquid herbicide therein, the dye may be provided mixed with the liquid herbicide. In such an embodiment the dye will be present in an aqueous form and as such will colour the mixture in the capsule giving a clearly identifiable product. The beneficial effect of a food grade dye is that it is non toxic and complies with National Rivers Authority Guidelines.

Referring to Figure 2a, there is exemplary embodiment of the method of treating the plant according to the exemplary embodiment of the present invention. The stem of the plant 12 is shown and the top of the plant has been cut off to leave an opening 14. Roots of the plant 16 extend under the ground. As the stem 12 is hollow a capsule 2 may be dropped into the opening 14 and treatment of the plant has therefore been completed. Such a treatment of programme is quick, directed to a specific plant, and is also effective as the necessary dose of herbicide is applied to each plant. This ensures that herbicide is not wasted nor does the herbicide unintentionally kill any surrounding plants that would occur with spray treatment. Such directed treatment ensures that enough herbicide is present to kill the plant. Within approximately 24 hours, the capsule will dissolve and the herbicide will be taken into the plant. At this time the dye or pigment is also released from the capsule and this will be visible through the stem 12 of the plant.

Referring to figure 2b, in an alternative method according to an alternative exemplary embodiment of the present invention, an aperture 15 may be provided in the stem of the plant. The capsule 2 may be inserted into the stem and again-treatment will then be completed.

## Claims

1. A method of administering a herbicide to a plant wherein the stem of the plant comprises a tubular portion having a cavity therein, the method comprising the steps of:
(a) providing an opening in the stem of a plant;
(b) inserting a consumable delivery means (2) including a herbicide into the opening in the stem of the plant.

2. A method according to claim 1 wherein the herbicide is in a solid form.

3. A method according to any preceding claim wherein the herbicide is granulated.

4. A method according to any preceding claim wherein the herbicide is in the form of a tablet.

5. A method according to any preceding claim wherein the consumable delivery means is a water soluble capsule.

6. A method according to claim 5 and claim 3 wherein the granulated herbicide is received in the water soluble capsule.

7. A method according to any of claims 5 or 6 wherein the capsule comprises a gelatinous material.

8. A method according to any preceding claim wherein the herbicide includes the active ingredient glyphosate.

9. A method according any preceding claim wherein the opening is provided by cutting the opening in the stem of the plant.

10. A method according to any of claims 1-8 wherein the opening is provided by cutting substantially the cross section of the stem.

11. A method according to any preceding claim further comprising administering a dye to the plant into the opening, wherein optionally the dye is water soluble; and wherein optionally the dye is in a powdered form; and wherein optionally the dye comprises a food grade dye.

## Patentansprüche

1. Verfahren zur Verabreichung eines Herbizids an eine Pflanze, wobei der Stängel der Pflanze einen röhrenförmigen Abschnitt mit einem darin befindlichen Hohlraum umfasst, wobei man bei dem Verfahren:
(a) eine Öffnung im Stängel einer Pflanze bereitstellt;
(b) ein konsumierbares Verabreichungsmittel (2), welches ein Herbizid einschließt, in die Öffnung im Stängel der Pflanze einführt.

2. Verfahren nach Anspruch 1, wobei das Herbizid in fester Form vorliegt.

3. Verfahren nach einem der vorhergehenden Ansprüche, wobei das Herbizid granulatförmig ist.

4. Verfahren nach einem der vorhergehenden Ansprüche, wobei das Herbizid in Form einer Tablette vorliegt.

5. Verfahren nach einem der vorhergehenden Ansprüche, wobei es sich bei dem konsumierbaren Verabreichungsmittel um eine wasserlösliche Kapsel handelt.

6. Verfahren nach Anspruch 5 und Anspruch 3, wobei das granulatförmige Herbizid in der wasserlöslichen Kapsel aufgenommen wird.

7. Verfahren nach einem der Ansprüche 5 oder 6, wobei die Kapsel ein gelatinöses Material umfasst.

8. Verfahren nach einem der vorhergehenden Ansprüche, wobei das Herbizid den Wirkstoff Glyphosat einschließt.

9. Verfahren nach einem der vorhergehenden Ansprüche, wobei die Öffnung bereitgestellt wird, indem man die Öffnung in den Stängel der Pflanze schneidet.

10. Verfahren nach einem der Ansprüche 1-8, wobei die Öffnung bereitgestellt wird, indem man im Wesentlichen den Querschnitt des Stängels schneidet.

11. Verfahren nach einem der vorhergehenden Ansprüche, bei dem man weiterhin an die Pflanze in der Öffnung einen Farbstoff verabreicht, wobei der Farbstoff gegebenenfalls wasserlöslich ist, und wobei der Farbstoff gegebenenfalls in pulverförmiger Form vorliegt, und wobei der Farbstoff gegebenenfalls einen für Nahrungsmittel zugelassenen Farbstoff umfasst.

## Revendications

1. Méthode d'administration d'un herbicide à une plante, **caractérisée en ce que** la tige de la plante comprend une partie tubulaire ayant une cavité interne, la méthode comprenant les étapes consistant à :
(a) produire une ouverture dans la tige d'une plante ;
(b) insérer un moyen de distribution consommable (2) comportant un herbicide dans l'ouverture dans la tige de la plante.

2. Méthode selon la revendication 1, **caractérisée en ce que** l'herbicide est sous une forme solide.

3. Méthode selon l'une ou l'autre des revendications précédentes, **caractérisée en ce que** l'herbicide est granulé.

4. Méthode selon l'une quelconque des revendications précédentes, **caractérisée en ce que** l'herbicide est sous forme de comprimé.

5. Méthode selon l'une quelconque des revendications précédentes, **caractérisée en ce que** le moyen de distribution consommable est une capsule hydrosoluble.

6. Méthode selon la revendication 5 ou la revendication 3, **caractérisée en ce que** l'herbicide granulé est introduit dans la capsule hydrosoluble.

7. Méthode selon l'une ou l'autre des revendications 5 et 6, **caractérisée en ce que** la capsule comprend une matière gélatineuse.

8. Méthode selon l'une quelconque des revendications précédentes, **caractérisée en ce que** l'herbicide comprend le principe actif le glyphosate.

9. Méthode selon l'une quelconque des revendications précédentes, **caractérisée en ce que** l'ouverture est produite en découpant l'ouverture dans la tige de la plante.

10. Méthode selon l'une quelconque des revendications 1 à 8, **caractérisée en ce que** l'ouverture est produite en découpant sensiblement la section transversale de la tige.

11. Méthode selon l'une quelconque des revendications précédentes, comprenant en outre l'administration d'un colorant à la plante dans l'ouverture, **caractérisée en ce que** le colorant est éventuellement hydrosoluble ; et **en ce que** le colorant est éventuellement sous forme de poudre ; et **en ce que** le colorant comprend éventuellement un colorant de qualité alimentaire.
